Europäisches Patentamt

European Patent Office

Office européen des brevets

(19)

(11) Publication number: **0 149 326**
**A2**

(12) # EUROPEAN PATENT APPLICATION

(21) Application number: **84308364.3**

(22) Date of filing: **03.12.84**

(51) Int. Cl.⁴: **A 63 F 9/10**

(30) Priority: **03.12.83 GB 8332344**
**09.03.84 GB 8406221**

(43) Date of publication of application:
**24.07.85 Bulletin 85/30**

(84) Designated Contracting States:
**AT BE CH DE FR IT LI LU NL SE**

(71) Applicant: **Davidson-Green, Michael**
**53 Pittville Lawn**
**Cheltenham Spa Gloucestershire, GL52 2BH(GB)**

(71) Applicant: **Davidson-Green, Lorraine Jean**
**53 Pittville Lawn**
**Cheltenham Spa Gloucestershire, GL52 2BH(GB)**

(72) Inventor: **Davidson-Green, Michael**
**53, Pittville Lawn**
**Cheltenham Spa Gloucestershire GL52 2BH(GB)**

(74) Representative: **Corfield, Peter Ralph et al,**
**A. R. Davies & Co. 27, Imperial Square**
**Cheltenham, Glos. GL50 1RQ(GB)**

(54) **Games.**

(57) A game comprising a playing board (10) and playing pieces (11), which may be pieces of a jigsaw, alphabet pieces or board game pieces, wherein the board (10) carries a layer (19) of magnetisable material, which may be an ink or paint containing metallic magnetisable particles, and the playing pieces (11) each carry a layer (15) of magnetisable material, which may be a plastics or rubber sheet material containing metallic magnetisable particles, and one of the said magnetisable layers being magnetised. Alternative combinations of ink or paint and plastics or rubber sheet material on the board and on the pieces respectively, are possible.

FIG.2.

FIG.3.

— 1 —

"Games"

This invention relates to games, particularly, though not exclusively jigsaw puzzles. Although usually referred to as jigsaw puzzles, these are not necessarily made by using a jig saw but the expression is used here in its more commonly known sense to refer to puzzles of this general kind in which pieces are placed in juxtaposition to make up a unique pattern or pictorial representation. Other games involving juxtaposition of pieces may also be applicable, including some in which the pieces may be placed in a variety of possible positions relatively to one another.

As is well known, a jigsaw puzzle comprises a puzzle in which a picture or design is assembled from a plurality of normally, though not necessarily, irregularly shaped pieces. It is usual, although again not essential, that there shall be some degree of interlocking between the pieces by lugs on some pieces engaging with cut-out sockets on other pieces for the purpose of retaining an assembled or partly assembled jigsaw puzzle in position.

It is the object of the invention to provide a game of this kind which is simple to manufacture as well as being effective and convenient in use.

According to the present invention there is provided a game comprising a playing board and a plurality of playing pieces which can be assembled on the board, the playing board and the pieces having respective elements of a magnetic combination which comprises layers of magnetisable material on the board and on the pieces respectively, the layer on one of these components being magnetised.

Conveniently, the plastics or rubber sheet material is fixed to a paper or paper pulp board by means of an adhesive. This sheet material may be magnetised prior to or after application to the board.

The ink or paint may be applied by a printing process. One or more layers may be applied.

According to a further aspect of the invention, there is provided a method of producing a game comprising producing a playing board, applying a layer of magnetisable material to the board, and producing playing pieces, and applying a layer of magnetisable material to said pieces, and one of the layers of magnetisable material being magnetised.

The invention will now be described by way of example with reference to the accompanying drawings in which:

Figure 1 is a general perspective view of a jigsaw puzzle constructed in accordance with the invention;

Figure 2 is a scrap cross-sectional view of the playing pieces;

Figure 3 is a scrap cross-sectional view of the playing surface board;

Figure 4 is a perspective view of an alternative board and pieces combination;

Figure 5 is a scrap cross-sectional view of an alternative form of the playing pieces;

Figure 6 is a scrap cross-sectional view of an alternative form of the playing board;

Figures 7 and 8 are scrap cross-sectional views of further alternative forms of playing pieces and playing board;

Figures 9 and 10 are scrap cross-sectional views of still further alternative forms of playing pieces and playing board, and

Figure 11 is a perspective view of a still further form of playing pieces and board, for use as a game.

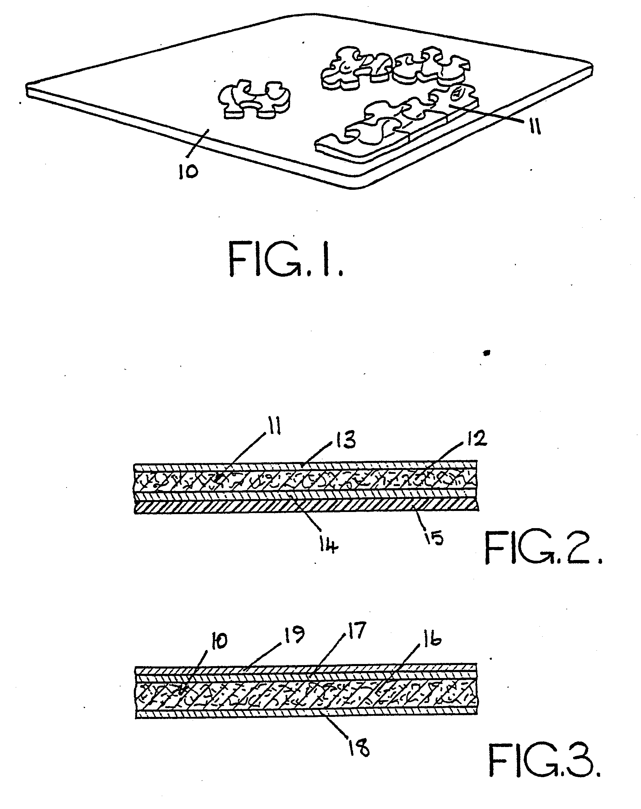

Figures 1, 2 and 3 of the drawings show a jigsaw puzzle comprising a board 10 on which playing pieces, indicated at 11, can be positioned. The arrangement is such that the pieces can collectively make up a picture or pattern when correctly and uniquely placed in juxtaposition. The total area of the pieces in such positions is approximately the same as, or slightly larger than the area of the board 10. The pieces may interlock by means of respective lugs and sockets and other combinations, as shown, but these interlocking formations may be omitted, the pieces simply abutting against one another. However, it is preferred that the pieces have distinctive and/or irregular shapes so that their inter-relationship can be recognised from their shape, as well as from the portions of the pictures or patterns applied to individual pieces.

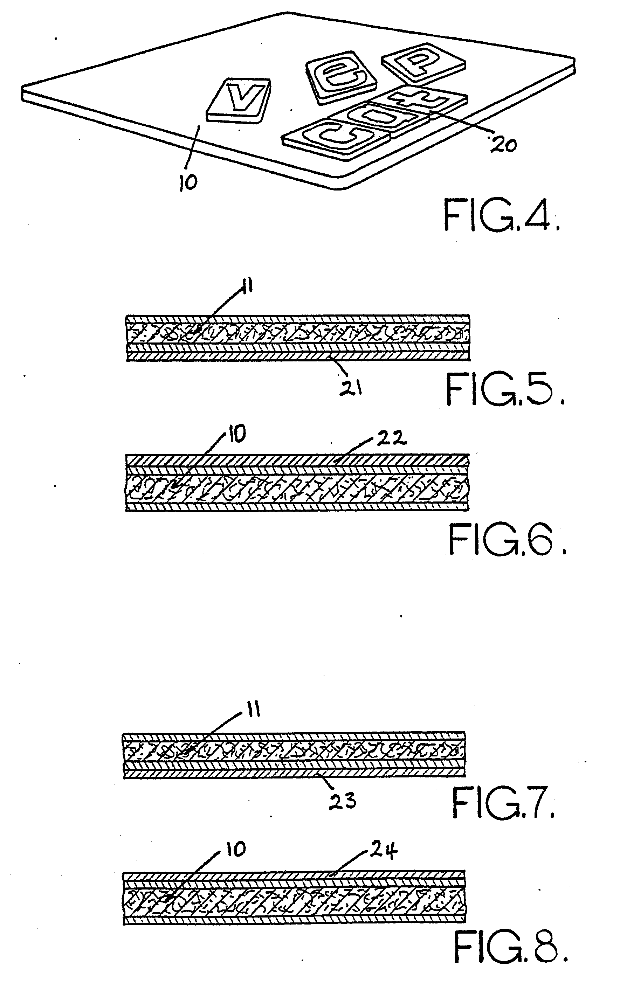

Figure 3 shows the playing board in cross-section. This comprises a board 12 made from paper or paper pulp, onto both surfaces of which layers of china clay coated paper are provided. These coating layers are shown at 13 and 14.

On the top surface of the board 12 there is applied a layer 15 of a metallic ink. This may be applied as one relatively thick layer or, preferably by two successive layers applied by a printing process. The ink which is used in this example is applied by silk-screen printing through a screen of 43 mesh (43 threads per square centimeter). The screen size used, however, is dependent upon the thickness of layer required and upon the particle size of metal particles in the ink. An alternative printing process comprises roller coating

- 5 -                           0149326

and this can be used to produce one relatively thick layer. A drying time of five to fifteen minutes is desirable.

The ink is a nitro cellulose based material carrying iron powder and an epoxy resin for hardening. The proportion of cellulose can be varied to control drying time. The iron is preferably a carbonite iron powder of 98% pure iron. The preferred make up comprises the following:

| | |
|---|---|
| Carbon | .8% |
| Nitrogen | .8% |
| Oxygen | .3% |
| Iron | 98% |

A particle size, between 4.2 and 8.2 mcns can be used but, preferably, particle size should be 5 mcns $\pm$ .3 mcns.

The ink formular preferably comprises:

| | |
|---|---|
| Iron powder | 40% |
| Nitro cellulose/thinners | 22% |
| Epoxy hardener | 38% |

The dried ink contains 85% iron for each layer applied by a printing process such as silk screen printing.

An alternative ink incorporates a carbonyle iron powder having iron particle size between 7 and 8 mcns and containing 98.2% pure iron, the make up of this iron powder comprising the following:

| | |
|---|---|
| Carbon | .7% |
| Nitrogen | .7% |
| Oxygen | .3% |
| Iron | 98.2% |

The ink depth is approximately .038mm.

Covering the ink layer (not illustrated) layers a varnish may be applied. This is applied wet through a silk-screen having 120 to 140 mesh size, and is then dried for five minutes using an ultra-violet drying process. Roller coating can be used for the varnish. In place of the varnish layer a thin cover sheet of paper may be used. The thickness of the board is preferably such that warping or bending are not likely to occur. The use of coated paper board inhibits impregnation of the ink into the board.

Figure 2 shows the playing pieces in scrap section. This comprises a board 16, also of paper or paper pulp with sheets of china clay coated paper 17, 18 on each side. The board is sufficiently rigid to prevent warping or bending.

To the upper surface there is applied a layer of adhesive, such as a suitable spirit adhesive. To this is secured a layer 19 formed from a sheet of magnetisable plastics or rubber material containing metal particles. This has a thickness between 3 and 8 millimetres and in this example 3 millimetre thickness is used. The sheet material is preferably magnetised prior to application to the board in a magnetic field having 7 to 10 poles per inch.

A magnetic attraction measured in mega gauss oersteds (MgOe) of 0.8 is achievable.

In use therefore the pieces may be placed individually upon the playing board 10. They may be picked up by breaking the magnetic attraction and replaced where required and they can be slid as required relatively to each other. However, the magnetic attraction is sufficient to hold the pieces in place and the risk of dislodging already assembled pieces is therefore minimised. It is possible, in this example, for the board to be inverted without the loss of the pieces from the playing surface. The device may be suitable for hospital patients who must lie on their back and can manipulate the pieces of the puzzle over their head.

Figure 4 shows an alternative form of the playing pieces in which each playing piece 20 is a rectangular or other regular shape carrying a letter of the alphabet or a number. Each has the layer of magnetised plastics or rubber sheet material as in the construction shown in Figure 2. They can be placed on the board which is the same as that shown in Figures 1 and 3, having in ink or paint layer. The letters and numbers can be placed in any desired order and in this the system differs from the jigsaw puzzle, in which the pieces have to be placed in unique juxtaposed positions, in order to complete a picture or particular pattern.

One advantage of applying the magnetised layer to the playing pieces is that they can be stuck, by magnetic attraction, to other magnetisable metallic surfaces, that is other than the playing board.

Figures 5 and 6 show an alternative arrangement for the playing pieces and the playing board. In this form, the playing pieces carry a layer 21 of ink or paint of the kind already described in relation to the board in Figure 3. The playing board, on the other hand, has the plastics or rubber sheet material of the kind referred to in relation to the pieces in Figure 2. In this example the plastics or rubber layer on the playing board is magnetised.

Figures 7 and 8 show a further alternative arrangement in which both the playing board and the playing pieces are provided with layers 23, 24 of the magnetisable ink or paint. One of these layers is magnetised, preferably, in this example, that on the playing board.

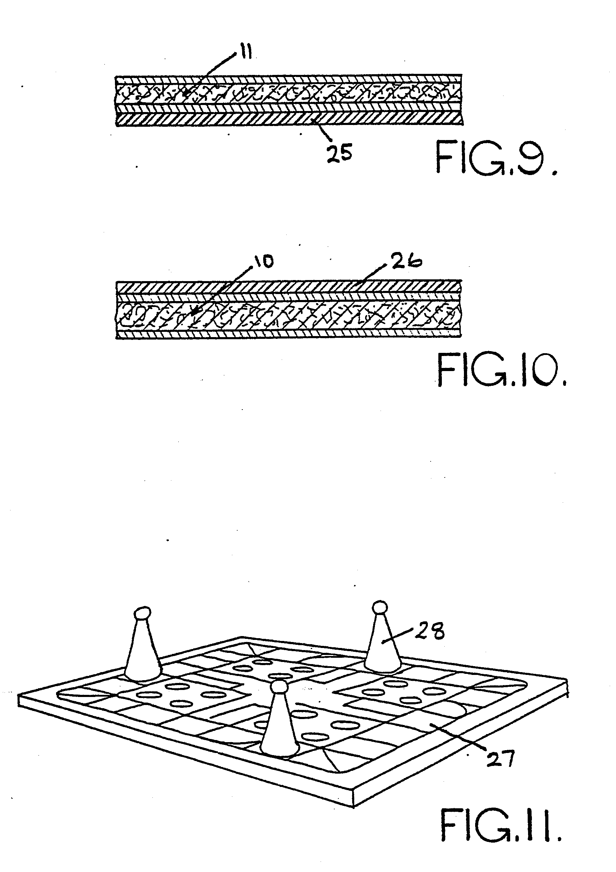

Figures 9 and 10 show a still further alternative arrangement in which both the playing board and the playing pieces have layers 25, 26 of the plastics or rubber sheet material. One of the layers, preferably that on the playing board, is magnetised.

In Figure 11 there is shown a still further form of playing board and playing pieces. This is intended for use as a board game of any known type. The board 27 is provided on its top surface with printed indications representing, inter alia, zones onto which playing pieces 28 can be placed during playing of a game according to appropriate rules. The printing of such indications takes place onto a paper sheet which is adhered to the top magnetisable surface layer of the playing board.  Alternatively, the printing may take place directly onto the surface.

Preferably in this example the playing board layer is magnetised and playing pieces 28, each carry a layer of the magnetisable material to enable them to adhere to the playing board in any position.  It is possible to provide for magnetic attraction only in zones at which the playing pieces 28 are to be placed and not in certain other zones.

In a further form of the games board as shown in Figure 11, there are printed indications upon both sides of the playing board 27, thus enabling one playing board to be used for two alternative forms of game.

0149326

## CLAIMS

1.        A game comprising a playing board (10) and a plurality of playing pieces (11) which can be assembled on the playing board (10), the playing board and the pieces (11) having respective elements of a magnetic combination which comprises layers (19, 15) of magnetisable material on the board and on the pieces respectively, the layer on one of these components being magnetised.

2.        A game as claimed in claim 1 in which at least one of the layers (19) of magnetisable material is an ink or paint containing metallic magnetisable particles.

3.        A game as claimed in claim 1 in which at least one of the layers (15) is a plastics or rubber sheet material containing metallic magnetisable particles.

4.        A game as claimed in any one of the preceding claims in which the layer (15) on one of the components is an ink or paint containing metallic magnetisable particles and the layer (19) on the other component is a plastics or rubber sheet material containing metallic magnetisable particles.

5.        A game as claimed in claim 4 in which the layer (15) comprising the plastics or rubber sheet material is magnetised.

6.        A game as claimed in any one of the preceding claims wherein the playing pieces (11) each have a layer (15) of magnetisable material on one side and a picture, pattern or other matter applied to the other side.

7. A game as claimed in any one of the preceding claims in which the plastics or rubber sheet material (15) is adhered to a paper or paper pulp board (12).

8. A game as claimed in claim 7 in which the plastics or rubber sheet material (15) is magnetised prior to or after application to the board (12).

9. A game as claimed in any one of the preceding claims in which the ink or paint (19) is applied by printing to a paper or paper pulp board (16).

10. A game as claimed in any one of the preceding claims in which the layer (19) of magnetisable material on the playing board (10) comprises an ink or paint containing metallic magnetisable particles.

11. A game as claimed in any one of the preceding claims in which the layer (15) of magnetisable material on the playing pieces (11) comprises plastics or rubber sheet material containing metallic magnetisable particles.

12. A game as claimed in any one of claims 1 to 10 in which the layer (22) of magnetisable material on the playing board (10) is a plastics or rubber sheet material containing metallic magnetisable particles.

13. A game as claimed in any one of claims 1 to 10 in which the layer (21) of magnetisable material on the playing pieces (11) comprises an ink or paint containing metallic magnetisable material.

14. A game as claimed in claim 1 in which the layers (23, 24) of magnetisable material on both the playing board (10) and the playing pieces (11) comprise respective layers of an ink or paint containing metallic magnetisable particles.

15.    A game as claimed in claim 1 in which the layers (25, 26) of magnetisable material on both the playing board (10) and the playing pieces (11) comprise plastics or rubber sheet material containing metallic magnetisable particles.

16.    A game as claimed in any one of the preceding claims in which the playing pieces (11) carry respective patterns or other matter capable of making up a unique pattern or picture when placed on the board in predetermined juxtaposed positions.

17.    A game as claimed in claim 16 in which the playing pieces (11) have respective interlocking formation enabling the pieces to be engaged together in their correct positions.

18.    A game as claimed in any one of claims 1 to 16 in which the playing pieces (20) carry respective patterns or other matter capable of making up patterns or other matter when the pieces are placed in a number of different relative positions.

19.    A game as claimed in any one of the preceding claims in which the layers (15, 19) on the playing board (10) and/or on the playing pieces (11) are overcoated with a protective layer.

20.    A game as claimed in claim 2 in which the ink or paint is a nitro cellulose based material carrying iron powder and a hardener.

21.      A game as claimed in claim 20 in which the iron powder particle size is between 4.2 and 8.2 mcns and in dried form the layer comprises approximately 85% iron.

22.      A game as claimed in claim 2 in which the ink or paint is a carbonyle iron powder.

23.      A game as claimed in claim 20 or 22 wherein the ink or paint layer thickness is approximately 0.038 mm.

24.      A game as claimed in claim 3 ·in which the thickness of the plastics or rubber sheet material is approximately 3 to 8 mm.

25.      A game as claimed in any one of the preceding claims in which the magnetised layer has a magnetic strength of approximately 0.8 MgOe.·

26.      A game as claimed in any one of the preceding claims wherein the playing board (27) has indications on the surface thereof on which the playing pieces (28) are to be placed, indicating the position or positions for the pieces.

27.      A game as claimed in any one of the preceding claims in which both side surfaces of the playing board (27) have a layer of magnetisable material.

28. ·     A game as claimed in claim 26 in which the surfaces of the playing board (27) carry respective different indications for the position or positions of the playing pieces.

29.      A method of producing a game comprising producing a playing board (10), applying a layer (19) of magnetisable material to said pieces (11) one of the layers (19, 15) of magnetisable material being magnetised.

30.      A method as claimed in claim 29 in which a layer (19) of ink or paint containing metallic magnetisable particles is applied to the playing board (10) and for the playing pieces (11) to serve as the layer thereon of magnetisable material.

31.      A method as claimed in claim 29 wherein a plastics or rubber sheet material containing metallic magnetisable material on the playing board (10) and/or on the playing pieces (11).

32.      A method as claimed in any one of claims 29 to 31 wherein a board has a layer (15) of magnetisable material applied thereto and then the board is cut up to make the playing pieces (11).

33.      A method as claimed in any one of claims 29 to 32 wherein one of the magnetisable layers (19, 15) is magnetised prior to or after application to the playing board (10) or to the playing pieces (11).

FIG.1.

FIG.2.

FIG.3.

FIG.4.

FIG.5.

FIG.6.

FIG.7.

FIG.8.

11

25

FIG.9.

10    26

FIG.10.

28

27

FIG.11.